# EUROPEAN PATENT APPLICATION

(11) **EP 4 847 320 A1**
(43) Date of publication of application: **02.12.2026**
(21) Application number: 26181049.3
(22) Date of filing: 26.05.2026
(51) Int. Cl.: B60R 1/26

(54) **IMPROVED SAFETY SYSTEM FOR A COMMERCIAL VEHICLE AND RELATED METHODS**

(30) Priority: 27.05.2025 IT 202500012148
(71) Applicant: Iveco S.p.A., 10156 Torino (IT)
(72) Inventor: BRAUN, Marlon, 10156 TORINO (IT)
(74) Representative: Studio Torta S.p.A.

(57) **Abstract**

Vehicular system (1) comprising a truck (2) and a trailer (3) carried by truck (2) along a longitudinal axis (A), first image acquisition means (4) carried by truck (2) and configured to acquire an image in a first area (A') containing at least a portion of trailer (3) and second image acquisition means (6) carried by trailer (3) and configured to acquire an image in a second area (A") behind trailer along said longitudinal axis (A), the vehicular system (1) further comprising an electronic control unit (U) configured to acquired data by first and second image acquisition means (4, 6), elaborate such data to generate an image wherein the area occupied by the trailer (3) is first area (A') is substituted by the image of the second area (A"), thereby providing to a driver of the vehicular system (1) an image of the rear portion of the truck (2) so that the trailer (3) is invisible.

## Description

### CROSS-REFERENCE TO RELATED APPLICATIONS

This patent application claims priority from Italian patent application no. 102025000012148 filed on May 27, 2025, the entire disclosure of which is incorporated herein by reference.

### TECHNICAL FIELD

The present invention concerns a safety system for commercial vehicle.

The present invention finds its preferred, although not exclusive, application in commercial vehicles such as trucks. Reference will be made to this application by way of example below.

### BACKGROUND OF THE INVENTION

Vehicles tend more and more to be provided with safety systems configured to facilitate to the driver the driving of the vehicle.

An example of such safety system is given by ADAS systems, Advanced Driving Assistance Systems, i.e. systems of sensor means acquiring data useful to the driver and displaying/signaling important information to the driver in order to facilitate the driving of the vehicle.

While such ADAS systems are an important safety system on passenger vehicle, they are furthermore important on commercial vehicles.

Indeed, commercial vehicles, due to their shape, have a reduced visibility along and behind the truck cab. In particular, when the truck is carrying a trailer, such visibility is furthermore reduced.

Indeed, the presence of the trailer reduces visibility for turning or lane change operations.

Therefore, the need is felt to improve safety for the driver in a cost-effective and optimized manner.

An aim of the present invention is to satisfy the above mentioned needs in a cost-effective and optimized manner.

### SUMMARY OF THE INVENTION

The aforementioned aim is reached by a vehicular system and methods as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a vehicle comprising a safety system according to the invention;

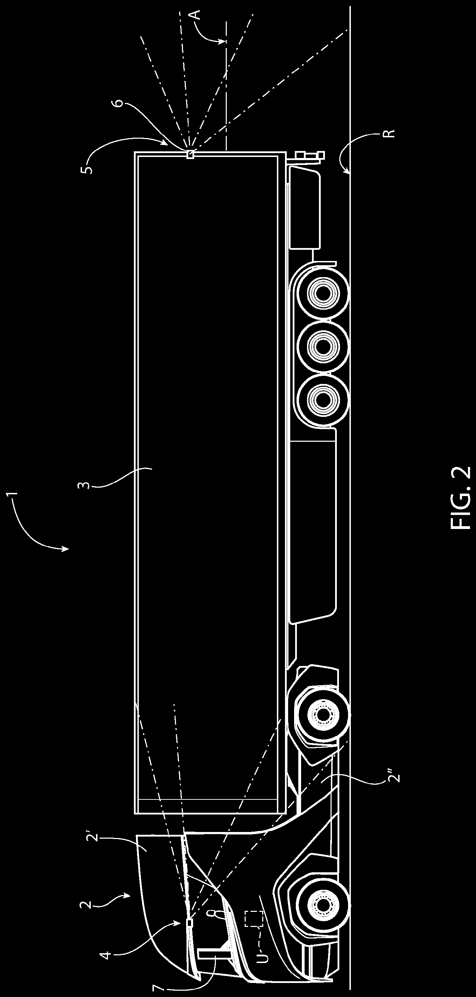

- Figure 2 is a lateral view of the vehicle of Figure 1;
- Figures 3A and 3B is a lateral view of the vehicle of Figure 2, in two different operative configurations during a straight-ahead driving modality;
- Figures 4A and 4B are perspective views of Figures 3A and 3B;
- Figures 5A and 5B are display views of a device in the vehicle comprising a safety system according to the invention in the configurations of figures 3 and 4, and
- Figures 6A and 6B is a top view of the vehicle of Figure 2, in two different operative configurations during a cornering driving modality.

### DETAILED DESCRIPTION OF THE INVENTION

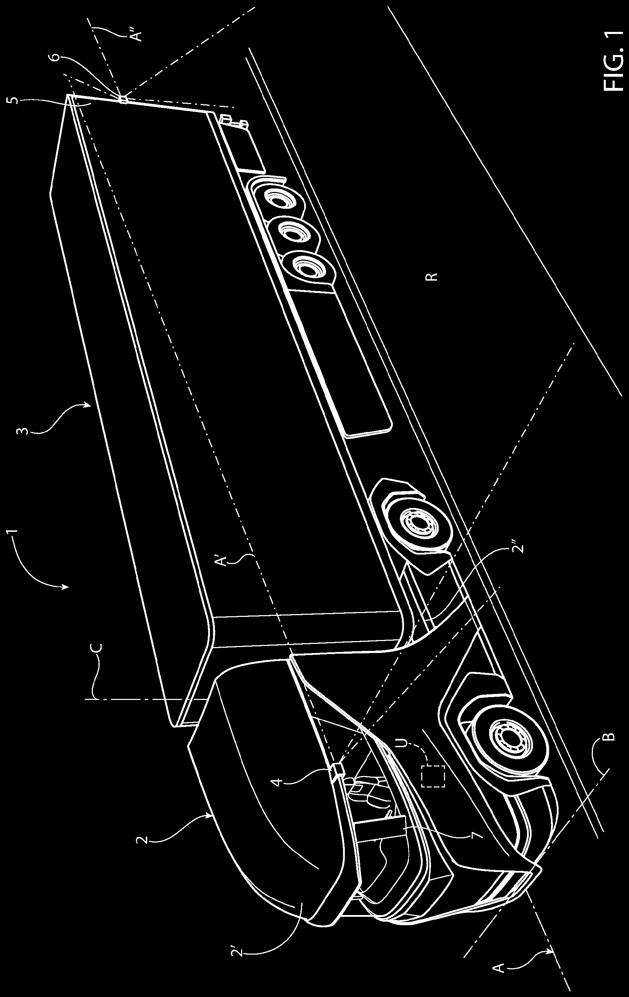

Figure 1 overall discloses a vehicle 1, in particular a commercial vehicle 1 driving on a road R. Vehicle 1 comprises a truck 2 and a trailer 3 towed by truck 2 along a longitudinal axis A that coincides with the driving direction of the vehicle 1.

In particular truck 2 comprises a cab 2' extending along a vertical axis C above a related chassis 2'' that provides a support, extending along the longitudinal axis A and a transversal axis B for connecting trailer 3 thereto.

According to the above, the trailer 3 follows the truck 2 along longitudinal axis A, i.e. it is placed in a rear position along the longitudinal axis A.

Vehicle 1 comprises first image acquisition means 4 configured to detect a first area A' rearward with respect to the cab 2, thereby containing at least a portion of the trailer 3. Such first image acquisition means 4 preferably comprises a camera.

Vehicle 1 furthermore comprise safety means 5 provided with second image acquisition means 6 configured to detect a second area A'' rearward with respect to the trailer 3. Such second image acquisition means 6 preferably comprises a camera, more preferably of the same typology of the camera of first image acquisition means 4.

The positioning of the second image acquisition means 6 is function of the position of the first image acquisition means 6, in other words, the second area A'' is detected in function of the first area A'.

In particular, first and second acquisition means 4, 6 are carried, respectively, in a rear upper portion of the cab 2' and in a rear upper portion of the trailer 3.

Safety system 6 further comprises an electronic control unit U provided with elaboration means electronically connected to the first and second image acquisition means 4, 6, acquire data from these latter and elaborate such data to generate an output image on a display device 7 that discloses the rear portion of the cab 2 without the presence of the trailer 3. In other words, the elaboration of electronic control unit U is configured to make the trailer 3 invisible.

In particular, electronic control unit U is electronically connected to display device 7 that can be a screen in the cab 2, as shown in the attached figures.

In particular, such display device 7 can be an electronic rearview mirror.

It is noticed that the above disclosed configuration can be provided for the left and the right side with respect to the longitudinal axis A or by a single central camera or only by a single camera on the driver side.

Similarly, the display device 7 can be provided singularly at the driver side or at both sides of the cab.

Moreover, display device 7 can provide a single image in a peculiar class, e.g. class 2 mirror view, or provide multiple images such as a class 2 and a class 4 mirror view. In particular, such display can be performed by dividing the display surface of the display device 7 in more portions.

The operation of the embodiment of the invention as described above is the following.

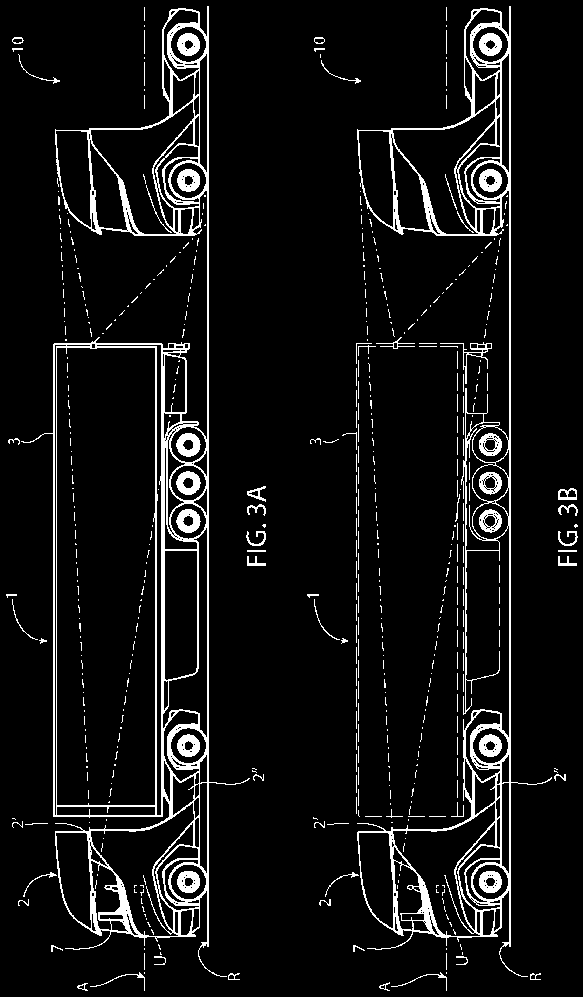

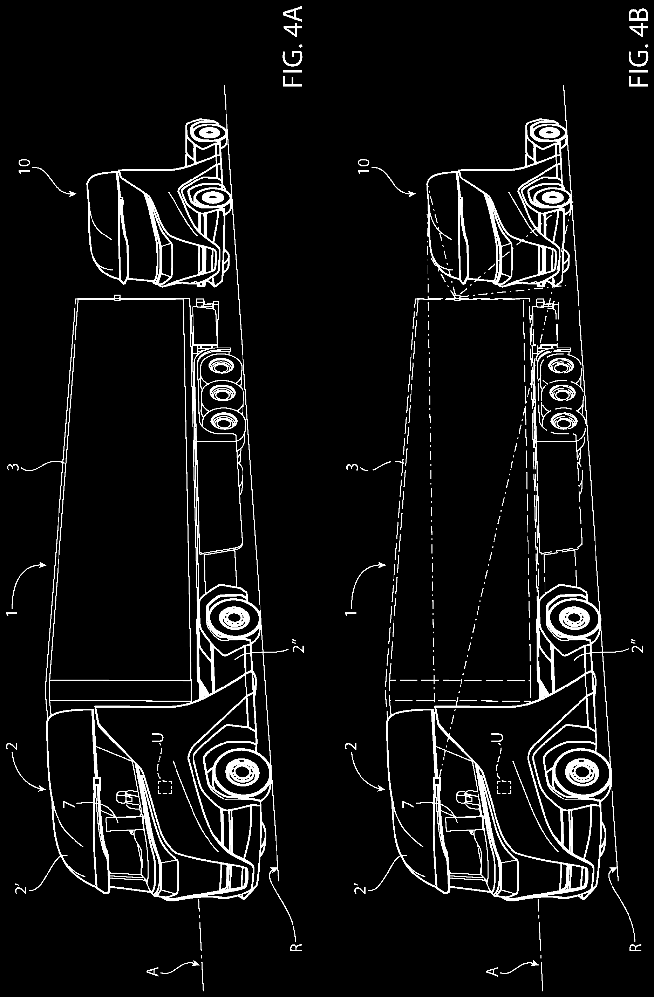

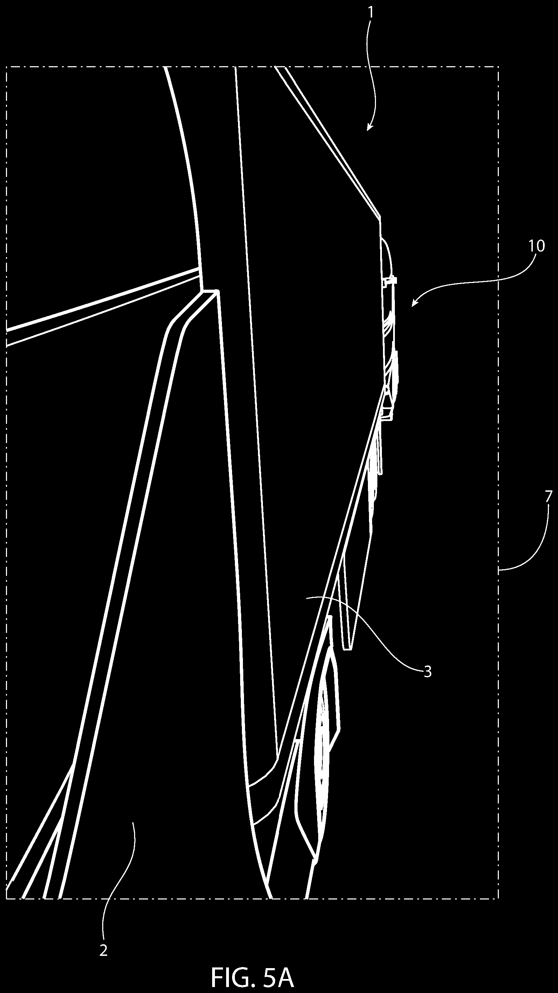

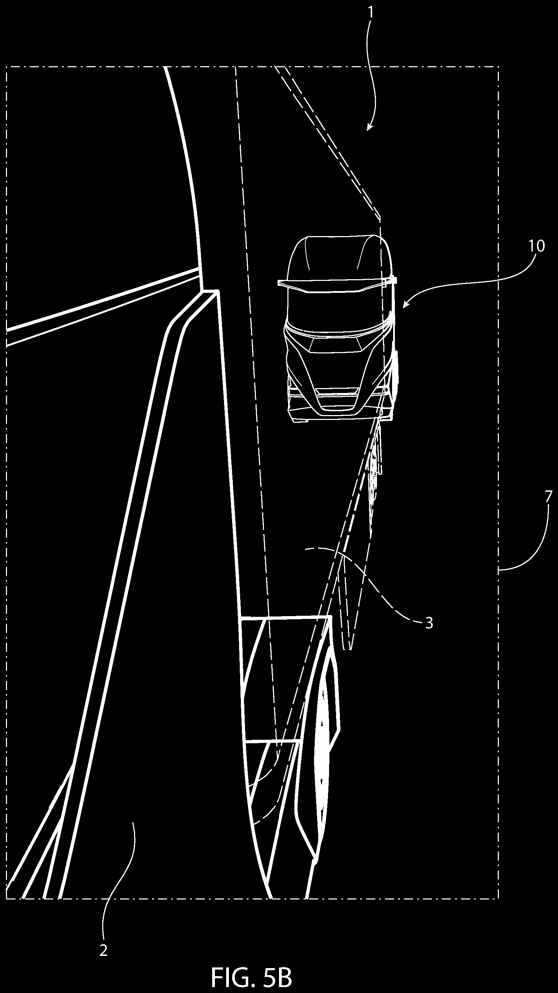

Making reference to figures 3A, 3B, 4A, 4B, 5A, 5B it is disclosed the physical configuration that is modified by the electronic control unit to provide a display configuration wherein the trailer is invisible during a straight-ahead driving modality. In particular, the electronic control unit, taking into account physical parameters of the vehicle, unite the images provided by the first image acquisition means 4 with the image provided by the second image acquisition means 6 thereby providing on the display device (see figure 5B) a modified view in which the trailer 3 is absent and there is complete visualization of the other elements in the road R. For instance, as can be appreciated, the driver can see a further element 10, such as a further vehicle, behind him along longitudinal axis, while in standard condition he would not have been able to see such element 10 properly (as in Figure 5A configuration) .

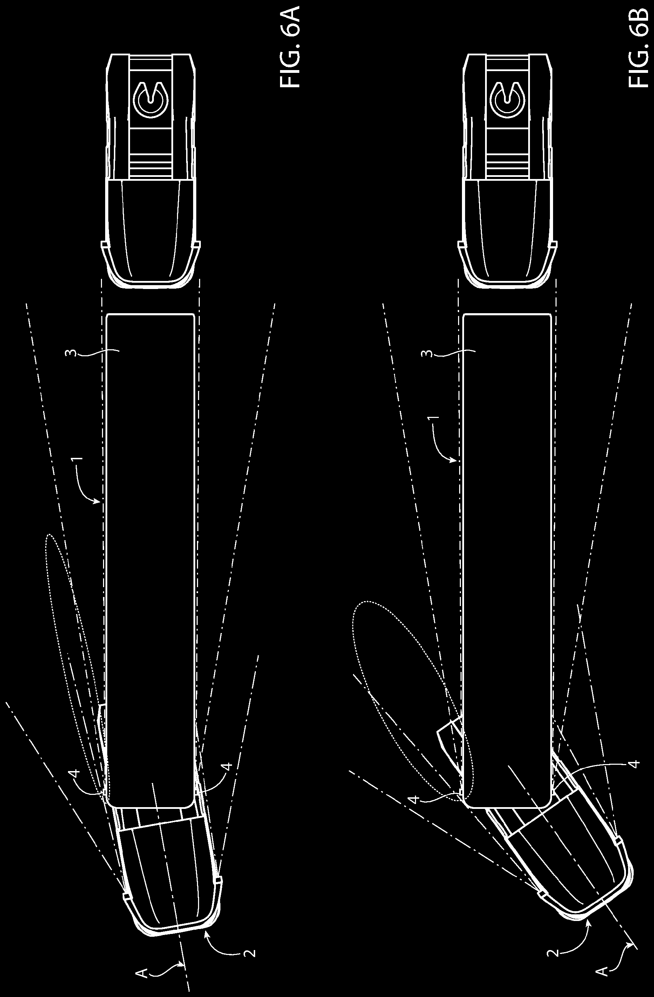

Making reference to figures 6A and 6B it is disclosed the physical configuration that is modified by the electronic control unit to provide a display configuration wherein the trailer is invisible during a cornering driving modality. In particular, the electronic control unit, taking into account physical parameters of the vehicle, modify the image provided by the first image acquisition means 4 - in case also considering the image provided by the second image acquisition means 6 according to the steering angle of the cab 2 with respect to trailer 3- thereby providing on the display device a modified view in which the trailer 3 is absent and there is complete visualization of the other elements over the trailer 3. The operation is indeed similar, even if the zone detected and "freed" by the trailer 3 is a different one.

Owing to the above, the present invention further relates to a method of generating an image in a vehicular system as described above and comprising the following steps:
i) Acquiring data of related to an image of a first area A' by first image acquisition means 4 and an image from a second area A'' by second image acquisition means 6;
ii) Generating an image by combining the images acquired at step i) so that the portion of the image of a first area A' containing trailer 3 of the vehicle 1 is substituted by the image of the second area A".

A further method may be summarized as follows:
i) Acquiring data of related to an image of a first area A' by first image acquisition means 4;
ii) Generating an image so that the portion of the image of a first area A' containing trailer 3 of the vehicle 1 is freed by said trailer 3.

Preferably, the method further comprises the following step:
In particular, the elaboration at step ii) is executed by known image elaboration methodology, taking into account:
a) The relative position of the first and second image acquisition means 4, 6 along the vehicle 1;
b) The features, such as dimension and focal depth, of the first and second area of acquisition A', A" ; and/or
c) Physical parameters of the vehicle 1 such as trailer 3 shape and relative disposition with respect to the cab 2.

The invention may further relate to method for driving assistance comprising the steps of method of generating image disclosed above and the further step:
iii) Displaying the image elaborated at step ii) at a display device 7.

In view of the foregoing, the advantages of the vehicular system and methods according to the invention are apparent.

Thanks to the proposed safety system it is possible to avoid the presence of the trailer thereby freeing the view of the image acquisition system.

Accordingly, the driver can have a full view of the space behind the cab and evaluate in better way possible maneuvers such as straight ahead driving, turning or lane change.

Therefore, the overall safety of the driver and of the road users is improved.

In particular, it is noticed that the proposed system is compact and can be provided as an additional kit to existing vehicles without major modifications. Indeed, main changes would be implemented via coding in the electronic control unit, i.e. providing the means for carrying out the above disclosed method and the vehicle physical parameters.

It is clear that modifications can be made to the vehicular system and methods which do not extend beyond the scope of protection defined by the claims.

For example, the image can be displayed in any suitable display means. Clearly, the typology of commercial vehicle, and its shape may vary.

The elaboration of the image and number of image acquisition means may vary consequently to the shape of the vehicle and the trailer.

## Claims

1. Vehicular system (1) comprising a truck (2) and a trailer (3) carried by said truck (2) along a longitudinal axis (A), said vehicular system (1) comprising first image acquisition means (4) carried by said truck (2) and configured to acquire an image in a first area (A') containing at least a portion of said trailer (3) and second image acquisition means (6) carried by said trailer (3) and configured to acquire an image in a second area (A") behind said trailer along said longitudinal axis (A), said vehicular system (1) further comprising an electronic control unit (U) configured to acquired data by said first and second image acquisition means (4, 6), elaborate such data to generate an image wherein the area occupied by the trailer (3) is said first area (A') is substituted by the image of said second area (A''), thereby providing to a driver of said vehicular system (1) an image of the rear portion of the truck (2) so that the trailer (3) is invisible.

2. Vehicular system (1) comprising a truck (2) and a trailer (3) carried by said truck (2) along a longitudinal axis (A), said vehicular system (1) comprising first image acquisition means (4) carried by said truck (2) and configured to acquire an image in a first area (A') containing at least a portion of said trailer (3), said vehicular system (1) further comprising an electronic control unit (U) configured to acquired data by said first image acquisition means (4), elaborate such data to provide to a driver of said vehicular system (1) an image of the rear portion of the truck (2) so that the trailer (3) is invisible.

3. Vehicular system according to claim 1 or 2, further comprising display means (7) configured to display said image generated by said electronic control unit (U).

4. Vehicular system according to claim 1, 2 or 3, wherein said image acquisition means (4, 6) comprise camera.

5. Vehicular system according to any of the preceding claims, wherein said image acquisition means (4, 6) are provided for each left and right side of said truck (2) and/or said trailer (3).

6. Vehicular system according to any of the preceding claims, wherein said image acquisition means (4, 6) carried by said truck (2) and/or said trailer (3) in a rear upper position thereof.

7. Vehicular system according to any of the preceding claims, wherein said electronic control unit (U) is the ECU of said vehicle (1).

8. Vehicular system according to any of the preceding claims depending to claim 3, wherein said display means (7) is an electronic rearview mirror.

9. Vehicular system according to claim 8, wherein said electronic rearview mirror is configured to display different portions of different classes of said generated image.

10. Method of generating an image in a vehicular system according to any of the preceding claims and comprising the following steps:
i) Acquiring data of related to at least an image of a first area (A') by first image acquisition means (4) and/or an image from a second area (A") by second image acquisition means (6);
ii) Generating an image by combining the images acquired at step i) so that the portion of the image of a first area (A') containing trailer (3) is substituted by the image of the second area (A").

11. Method of generating an image in a vehicular system according to any of the preceding claims depending on claim 2 and comprising the following steps:
i) Acquiring data of related to an image of a first area A' by first image acquisition means (4);
ii) Generating an image so that the portion of the image of a first area (A') containing trailer (3) of the vehicle 1 is freed by said trailer (3).

12. Method according to claim 10 or 11, wherein said generation is executed by taking into account:
a) The relative position of the first and second image acquisition means (4, 6) along the vehicular system (1);
b) The features of the first and second area of acquisition (A', A''); and
c) Physical parameters of the vehicular system (1).

13. Method for driving assistance comprising the steps of method of generating image according to claim 10 or 11 and the further step:
iii) Displaying the image elaborated at step ii) at a display device (7) .
